# EUROPÄISCHE PATENTANMELDUNG

(11) **EP 3 945 734 A1**
(43) Veröffentlichungstag der Anmeldung: **02.02.2022**
(21) Anmeldenummer: 21185733.9
(22) Anmeldetag: 15.07.2021
(51) Int. Cl.: H04R 25/00

(54) **VERFAHREN ZUM AUFBAU EINER KURZSTRECKENFUNKVERBINDUNG UND HÖRGERÄT**

(30) Priorität: 28.07.2020 DE 102020209508
(71) Anmelder: Sivantos Pte. Ltd., Singapore 539775 (SG)
(72) Erfinder: CAVALLARI, Riccardo, 91052 Erlangen (DE); MIJOVIC, Stefan, 91056 Erlangen (DE)
(74) Vertreter: FDST Patentanwälte

(57) **Zusammenfassung**

Es wird ein Verfahren beschrieben zum Aufbau einer Kurzstreckenfunkverbindung (2), insbesondere einer Bluetooth-Verbindung, zwischen zwei Geräten (4, 6), nämlich einem Hörgerät (4) und einem Zusatzgerät (6), wobei das Hörgerät (4) einen Schalter (8) als ein Eingabeelement aufweist und einen Hörer (10) als ein Ausgabeelement, wobei das Zusatzgerät (6) ein Eingabeelement (12) und ein Ausgabeelement (14) aufweist, wobei eine gegenseitige Authentifizierung durchgeführt wird, indem ein jeweiliges Gerät (4, 6) eine Zeichenfolge (Na, Nb) generiert und an das andere Gerät (4, 6) übermittelt und indem anschließend auf beiden Geräten (4, 6) jeweils mithilfe beider Zeichenfolgen (Na, Nb) ein Prüfcode (Va, Vb) generiert wird und über das jeweilige Ausgabeelement (10, 14) an einen Nutzer ausgegeben wird, wobei die Authentifizierung erfolgreich abgeschlossen wird und daraufhin eine Kurzstreckenfunkverbindung 2 aufgebaut wird, falls über das jeweilige Eingabeelement (8, 12) eine Bestätigung des Nutzers empfangen wird, dass die Prüfcodes (Va, Vb), welche ausgegeben worden sind, übereinstimmen. Weiterhin wird ein entsprechendes Hörgerät (4) beschrieben.

## Beschreibung

Die Erfindung betrifft ein Verfahren zum Aufbau einer Kurzstreckenfunkverbindung, insbesondere einer Bluetooth-Verbindung, zwischen einem Hörgerät und einem Zusatzgerät sowie weiterhin ein entsprechendes Hörgerät.

Eine Kurzstreckenfunkverbindung ist eine Verbindung per Funk z.B. bei einer Übertragungsfrequenz von wenigen GHz über eine kurze Strecke von z.B. höchsten mehreren 10 m zwischen zwei Geräten und dient zur Datenübertragung, d.h. zum Austausch von Daten zwischen diesen beiden Geräten. Ein Beispiel für eine Kurzstreckenfunkverbindung ist eine Bluetooth-Verbindung. Eine Kurzstreckenfunkverbindung wird zwischen zwei Geräten aufgebaut, indem diese im Vorfeld der tatsächlichen Verbindung, d.h. beim Aufbau der Verbindung, Kopplungsdaten austauschen, zur Kopplung der beiden Geräte und somit letztendlich zur Herstellung der Kurzstreckenfunkverbindung. Die Bluetooth-Technologie im Allgemeinen sowie der Aufbau einer Bluetooth-Verbindung im Speziellen sind beschrieben in der Bluetooth-Spezifikation, genauer der BLUETOOTH CORE SPECIFICATION Version 5.2, welche beispielsweise unter www.bluetooth.com abrufbar ist.

Ein Hörgerät dient regelmäßig zur Versorgung eines hörgeschädigten Nutzers. Hierzu weist das Hörgerät ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Modifikation erfolgt insbesondere anhand eines individuellen Audiogramms des Nutzers, welcher dem Hörgerät zugeordnet ist, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird.

Regelmäßig besteht ein Bedürfnis eines Nutzers darin, zwei Geräte zum Datenaustausch zu verbinden, speziell mittels einer Kurzstreckenfunkverbindung, da eine solche eine hohe Mobilität und Flexibilität gewährleistet, bei gleichzeitiger Sicherheit aufgrund der beschränkten Reichweite. Denkbar ist beispielsweise eine Kopplung eines Hörgeräts mit einem Smartphone, um mittels des Smartphones das Hörgerät zu steuern oder einzustellen oder um umgekehrt Daten vom Hörgerät an das Smartphone zu senden und dort z.B. zu verarbeiten.

Die Kopplung, auch als Paarung oder "Pairing" bezeichnet, zweier Geräte mittels einer Kurzstreckenfunkverbindung ist potentiell anfällig für sogenannte "man-in-the-middle"-Angriffe (kurz MITM-Angriffe), bei welchen ein erstes Gerät anstelle mit dem gewollten, zweiten Gerät mit einem anderen, dritten Gerät verbunden wird. Entsprechend stellt die oben genannte Bluetooth-Spezifikation verschiedene Möglichkeiten zur Verbesserung der Sicherheit bei der Kopplung zur Verfügung. Die Kopplung und verschiedene Verfahren zur Kopplung sind in der Bluetooth-Spezifikation beschrieben, speziell unter Vol. 3, Part H, 2.3 "Pairing Methods". Kern ist hierbei die Verwendung eines Schlüssels zur Authentifizierung der beiden Geräte, welche gekoppelt werden sollen, gegebenenfalls in Verbindung mit einer Nutzerinteraktion, zur weiteren Verbesserung der Sicherheit. Problematisch ist allerdings, dass nicht jedes Gerät für eine Nutzerinteraktion geeignet ist. In der Bluetooth-Spezifikation, speziell im bereits zitierten Abschnitt, wird daher unterschieden zwischen unterschiedlichen Möglichkeiten der Nutzerinteraktion, welche auch als Ein- und Ausgabemöglichkeiten oder als "IO capabilities" bezeichnet werden. Je nach vorhandener Möglichkeit der beiden Geräte werden dann in Tabelle 2.8 des zitierten Abschnitts geeignete Verfahren zur Kopplung zugeordnet. Speziell ein Hörgerät weist typischerweise weder eine Tastatur ("Keyboard") noch einen Bildschirm ("Display") auf und fällt daher grundsätzlich in die Klasse "No Input, No Output". Für diese Klasse ist die Authentifizierung jedoch wenig sicher.

In der US 9,924,358 B2 wird ein Verfahren zur Authentifizierung beschrieben, bei welchem ein Telefon als Bluetooth-Host mit einem Zusatzgerät als Bluetooth-Gerät gepaart wird. Auf eine Schlüsselanfrage hin generiert das Zusatzgerät einen Schlüssel, welcher mittels eines Text-zu-Sprache-Moduls über einen Lautsprecher an einen Nutzer ausgegeben wird. Das Telefon erfragt vom Nutzer den Schlüssel, welcher dann von Nutzer mittels einer Tastatur in das Telefon eingegeben wird. Daraufhin werden die Schlüssel gemäß der Bluetooth-Spezifikation miteinander verglichen, um die Authentifizierung abzuschließen. Das Zusatzgerät weist hierbei lediglich eine Ausgabemöglichkeit auf, nicht aber eine Eingabemöglichkeit. Insgesamt erfolgt die Authentifizierung mittels des sogenannten "Passkey Entry"-Verfahrens, welches in der genannten Bluetooth-Spezifikation beschrieben ist.

Zusätzlich werden noch genannt: CA 2 814 290 A1, US 10,250,692 B2, US 2014/046664 A1, US 2015/099466 A1, WO 2015/028050 A1, WO 2017/174134 A1.

Vor diesem Hintergrund ist es eine Aufgabe der Erfindung, den Aufbau einer Kurzstreckenfunkverbindung zwischen einem Hörgerät und einem Zusatzgerät zu verbessern und dabei möglichst sicher zu gestalten, speziell gegen "man-in-the-middle"-Angriffe. Hierzu soll ein verbessertes Verfahren zum Aufbau einer Kurzstreckenfunkverbindung angegeben werden. Außerdem soll ein verbessertes Hörgerät angegeben werden, welches in einem solchen Verfahren mit einem Zusatzgerät koppelbar ist.

Die Aufgabe wird erfindungsgemäß gelöst durch ein Verfahren mit den Merkmalen gemäß Anspruch 1 sowie durch ein Hörgerät mit den Merkmalen gemäß Anspruch 9. Vorteilhafte Ausgestaltungen, Weiterbildungen und Varianten sind Gegenstand der Unteransprüche. Dabei gelten die Ausführungen im Zusammenhang mit dem Verfahren sinngemäß auch für das Hörgerät und umgekehrt. Sofern nachfolgend Verfahrensschritte des Verfahrens beschrieben sind, ergeben sich vorteilhafte Ausgestaltungen für das Hörgerät insbesondere dadurch, dass dieses ausgebildet ist, einen oder mehrere dieser Verfahrensschritte auszuführen.

Das Verfahren dient zum Aufbau einer Kurzstreckenfunkverbindung, insbesondere einer Bluetooth-Verbindung, zwischen zwei Geräten, nämlich einem Hörgerät und einem Zusatzgerät. Das Zusatzgerät und das Hörgerät werden auch als erstes Gerät und zweites Gerät bezeichnet oder als Gerät A und Gerät B oder als initialisierendes und nicht-initialisierendes Gerät, wobei die Zuordnung der Begriffe zu einem jeweiligen Gerät an sich beliebig ist. Die beiden Geräte weisen entsprechend jeweils eine Schnittstelle für die Kurzstreckenfunkverbindung auf, z.B. eine Antenne, insbesondere Bluetooth-Antenne. Der Aufbau der Kurzstreckenfunkverbindung wird auch als Kopplung, Paarung oder "Pairing" bezeichnet. Die Kurzstreckenfunkverbindung zeichnet sich insbesondere dadurch aus, dass diese eine beschränkte Reichweite von höchstens wenigen 10 m aufweist sowie eine Übertragungsfrequenz im Bereich weniger GHz. Im Falle einer Bluetooth-Verbindung ist diese vorzugsweise eine Niedrigenergie-Bluetooth-Verbindung, auch als BLE (d.h. "bluetooth low energy") bezeichnet.

Das Hörgerät weist einen Schalter als ein Eingabeelement auf und einen Hörer als ein Ausgabeelement. Das Zusatzgerät weist ein Eingabeelement und ein Ausgabeelement auf. Insgesamt weisen somit beide Geräte jeweils ein Eingabeelement und ein Ausgabeelement auf. Zumindest beim Hörgerät sind das Eingabeelement und das Ausgabeelement voneinander verschieden. Beim Zusatzgerät fallen das Eingabeelement und das Ausgabeelement zu einem einzelnen Ein- Ausgabeelement zusammen oder sind wie beim Hörgerät separat ausgebildet.

Bei dem Verfahren wird eine gegenseitige Authentifizierung durchgeführt, d.h. die beiden Geräte authentifizieren sich einander, um zu überprüfen, dass die Kurzstreckenfunkverbindung auch tatsächlich wie beabsichtigt zwischen dem Hörgerät und dem Zusatzgerät hergestellt wird und nicht fälschlicherweise zwischen einem der beiden Geräte und einem dritten Gerät. Die gegenseitige Authentifizierung wird durchgeführt, indem ein jeweiliges Gerät eine Zeichenfolge generiert und an das andere Gerät übermittelt und indem anschließend auf beiden Geräten jeweils mithilfe beider Zeichenfolgen ein Prüfcode generiert wird und über das jeweilige Ausgabeelement an einen Nutzer ausgegeben wird. Diese beiden Zeichenfolgesind beispielsweise einfache Werte und werden auch als private Zeichenfolgen bezeichnet, speziell auch als "nonce values". Beim Hörgerät wird der Prüfcode als Schallsignal ausgegeben, beim Zusatzgerät wird der Prüfcode beispielsweise angezeigt oder auf andere Weise ausgegeben.

Die jeweilige Zeichenfolgewird vom jeweiligen Gerät selbstständig generiert und vorzugsweise zufallsgeneriert. Die jeweilige Zeichenfolge ist insbesondere eine Einmalzeichenfolge, auch als Einmalschlüssel bezeichnet, welche bzw. welcher lediglich für einen einzelnen Versuch zum Aufbau einer Kurzstreckenfunkverbindung verwendet wird, da die Zeichenfolge ja übertragen wird und somit potentiell abgefangen werden kann. Bei einem erneuten Versuch, d.h. beim erneuten Durchführen des Verfahrens, wird zweckmäßigerweise eine neue Zeichenfolge generiert.

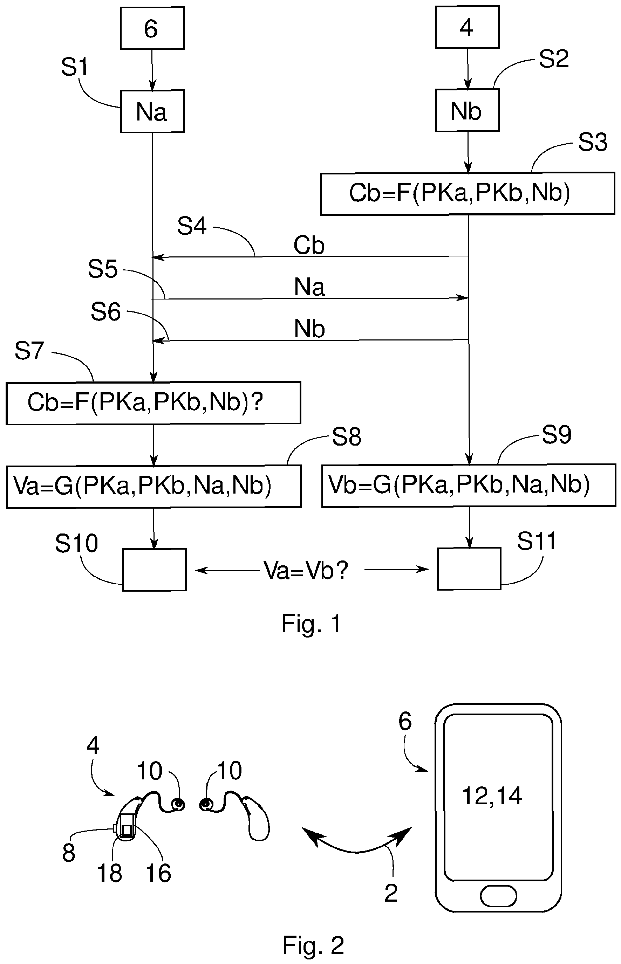

Die Übermittlung der beiden Zeichenfolgen folgt vorzugsweise einem Protokoll, insbesondere wie in Figur 2.3 im Abschnitt Vol. 3, Part H, 2.3 "Pairing Methods" der zitierten Bluetooth-Spezifikation 5.2 gezeigt. Allgemein werden die beiden Zeichenfolgen übermittelt, indem jedes der beiden Geräte zusätzlich einen öffentlichen Schlüssel bereitstellt und an das jeweils andere Gerät übermittelt, sodass jedes der beiden Geräte die beiden öffentlichen Schlüssel sowie seine eigene, private Zeichenfolge kennt. Nachfolgend wird ohne Beschränkung der Allgemeinheit eines der Geräte als Gerät A bezeichnet und das andere Gerät als Gerät B und angenommen, dass das Gerät A das initialisierende Gerät ist und das Gerät B das nicht-initialisierende Gerät. Das Gerät B erzeugt mittels einer vorbestimmten Funktion aus den beiden öffentlichen Schlüsseln und seiner eigenen, privaten Zeichenfolge einen Bestätigungsschlüssel, welcher an das Gerät A übermittelt wird, woraufhin dieses Gerät A seine Zeichenfolge an das Gerät B zurückübermittelt, sodass das Gerät B nun im Besitz beider Zeichenfolgen ist. Daraufhin übersendet das Gerät B seine Zeichenfolge an das Gerät A, sodass nun auch das Gerät A im Besitz beider Zeichenfolgen ist. Das Gerät A errechnet nun auf die gleiche Weise wie das Gerät B einen Bestätigungsschlüssel und überprüft, ob dieser mit dem Bestätigungsschlüssel, welchen das Gerät B übermittelt hat, übereinstimmt. Dabei errechnet das Gerät A den Bestätigungsschlüssel mittels der gleichen Funktion und auf Basis der beiden öffentlichen Schlüssel sowie der Zeichenfolge des Geräts B, die eigene Zeichenfolge des Geräts A wird dabei aber nicht verwendet. Dadurch wird insbesondere sichergestellt, dass die Zeichenfolge mit dem korrekten Gerät ausgetauscht wurde. Die Funktion ist beispielsweise öffentlich bekannt, vorzugsweise wird die in der zitierten Bluetooth-Spezifikation im Abschnitt Vol. 3, Part H, 2.2.6 "LE Secure Connections confirm value generation function f4" genannte Funktion f4 verwendet. Falls die beiden Bestätigungsschlüssel übereinstimmen erzeugt das Gerät A aus den zwei öffentlichen Schlüsseln und den zwei Zeichenfolgen einen Prüfcode und gibt diesen aus. In gleicher Weise erzeugt auch das Gerät B einen Prüfcode und gibt diesen ebenfalls aus. Der Prüfcode ist vorzugsweise eine sechsstellige Ziffernfolge. Falls ein "man-in-the-middle"-Angriff erfolgt ist, unterscheiden sich die beiden Prüfcodes mit hoher Wahrscheinlichkeit.

Beide Geräte erwarten nun eine Bestätigung des jeweiligen Prüfcodes durch einen Nutzer. Der Nutzer kann nun die beiden Prüfcodes vergleichen und bei einer Übereinstimmung auf beiden Geräten jeweils eine Bestätigung eingeben. Die Authentifizierung wird dann erfolgreich abgeschlossen und daraufhin eine Kurzstreckenfunkverbindung aufgebaut, falls über das jeweilige Eingabeelement eine Bestätigung des Nutzers empfangen wird, dass die Prüfcodes, welche ausgegeben worden sind, übereinstimmen. Im Falle einer Bluetooth-Verbindung ist somit das "Numeric Comparison"-Verfahren gemäß der genannten Bluetooth-Spezifikation realisiert. Die Bestätigung ist eine einfache Eingabe, welche lediglich zur Bestätigung dient, nicht aber eine Eingabe eines Schlüssels oder eines Prüfcodes umfasst. Abweichend vom "Passkey Entry"-Verfahren wird vorliegend ein Bestätigungsschlüssel lediglich in einer Richtung zwischen den beiden Geräten übermittelt und nicht in beiden Richtungen. Ein weiterer Unterschied zum "Passkey Entry"-Verfahren ist, dass vom Nutzer lediglich eine Bestätigung der Übereinstimmung der Prüfcodes erwartet wird, nicht aber eine Eingabe des Prüfcodes in eines der oder in beide Geräte. Ein solche Eingabe eines Prüfcodes ist vorliegend nicht erforderlich. In Abgrenzung zum "Just Works"-Verfahren der genannten Bluetooth-Spezifikation ist aber vorliegend eine Bestätigung des Prüfcodes auf beiden Geräten für eine erfolgreiche Authentifizierung zwingend erforderlich. Demgegenüber wird beim "Just Works"-Verfahren auf eine Bestätigung durch den Nutzer verzichtet und die Übereinstimmung der Bestätigungsschlüssel bereits als ausreichend für eine erfolgreiche Authentifizierung angesehen.

Vorzugsweise ermöglicht das Eingabeelement eine "ja/nein"-Eingabe, d.h. eine Auswahl einer von zwei Antworten. Ebenfalls geeignet ist auch ein Eingabeelement, welches lediglich eine einzelne Antwort ermöglicht, welche dann als "ja" gewertet wird, d.h. als Bestätigung. Ein Ausbleiben einer Antwort wird dann insbesondere als "nein" gewertet, d.h. als Ablehnung. Eine solch einfache Eingabe ist vorteilhaft mittels eines bereits am Hörgerät vorhandenen Eingabeelements realisiert, beispielsweise mittels eines Wippschalters (sogenannter "rocker switch"), welcher allgemein wenigstens zwei und typischerweise drei Stellungen aufweist. Vorzugsweise weist der Schalter eine mittlere Neutralstellung auf und ist durch Vorschieben in eine zweite Stellung überführbar und durch Zurückschieben in eine dritte Stellung. Zweckmäßigerweise kehrt der Schalter selbstständig in die Neutralstellung zurück. Ein solcher Schalter ist beispielsweise bereits zur Lautstärkeeinstellung oder zur Programmwahl vorhanden. Grundsätzlich denkbar und geeignet ist aber auch ein einfacher Taster als Schalter, welcher zumindest eine Bestätigung ermöglicht, also lediglich eine "ja"-Eingabe oder ein anderer Schalter mit geeigneter Funktionalität.

Kerngedanke der vorliegenden Erfindung ist insbesondere, einen Hörer eines Hörgeräts als ein Ausgabeelement zu nutzen und einen Schalter des Hörgeräts als ein Eingabeelement, sodass dieses mit einem Zusatzgerät, welches ebenfalls ein Eingabeelement und ein Ausgabeelement aufweist, besonders sicher verbindbar ist, nämlich durch wechselseitige Bestätigung eines Schlüssels auf beiden Geräten. Speziell beim Aufbau einer Bluetooth-Verbindung identifiziert sich das Hörgerät somit vorzugsweise als Gerät der Klasse "Display Yes/No" und der Aufbau, d.h. eine Kopplung, erfolgt geeigneterweise mittels des Verfahrens "Numeric Comparison" gemäß der eingangs genannten Bluetooth-Spezifikation. Mit anderen Worten: vorliegend ist eine einfache Bestätigung auf beiden Geräten ausreichend, eine Eingabe des Schlüssels auf einem oder auf beiden Geräten wird nicht verlangt. Trotz der beschränkten Ein- und Ausgabemöglichkeiten (d.h. "IO capabilities") des Hörgeräts ist dann dennoch die Sicherheit beim Aufbau der Kurzstreckenfunkverbindung vorteilhaft verbessert.

Ein Vorteil der Erfindung besteht insbesondere darin, dass ein Hörgerät, welches an sich keine Möglichkeit zur Anzeige des Prüfcodes aufweist und auch keine Möglichkeit zur Eingabe eines Prüfcodes, trotzdem besonders sicher mit einem anderen Gerät, nämlich einem Zusatzgerät, über eine Kurzstreckenfunkverbindung gekoppelt wird, d.h. verbunden wird. Im Rahmen der genannten Bluetooth-Spezifikation gehört ein Hörgerät eigentlich zur Klasse "No Input, No Output", da weder eine Tastatur ("Keyboard") noch ein Bildschirm ("Display") vorhanden sind. Somit stehen unabhängig vom Zusatzgerät zum Aufbau einer Kurzstreckenfunkverbindung eigentlich lediglich das Verfahren "Just Works" zur Verfügung, welches jedoch keine Authentifizierung umfasst und daher wenig sicher ist. In der eingangs genannten US 9,924,358 B2 gehört das dort beschriebene Telefon hinsichtlich dessen "IO capabilities" der Klasse "Keyboard Display" an, das Zusatzgerät dagegen aufgrund der Ausgabe per Lautsprecher der Klasse "Display Only", da zwar kein Bildschirm vorhanden ist, allerdings ein Lautsprecher, über welchen eine Ausgabe möglich ist. Eine Eingabe ist aber nicht möglich. Entsprechend der bereits genannten Tabelle 2.8 lässt sich dann eine Kopplung mittels des "Passkey Entry"-Verfahrens realisieren, welches eine Authentifizierung umfasst und entsprechend sicherer ist, als das "Just Works"-Verfahren. Vorliegend wird nun abweichend hiervon ein noch sichereres "Numeric Comparison"-Verfahren ermöglicht.

Das Hörgerät dient vorzugsweise zur Versorgung eines hörgeschädigten Nutzers. Hierzu weist das Hörgerät ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Signalverarbeitung ist vorzugsweise ein Teil der Steuereinheit. Die Modifikation erfolgt insbesondere anhand eines individuellen Audiogramms des Nutzers, welcher dem Hörgerät zugeordnet ist, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird.

Alternativ ist das Hörgerät lediglich zur Ausgabe von Schall aus einer Audioquelle ausgebildet und weist entsprechend einen Hörer auf, zur Schallausgabe, und einen Eingang, zum Empfang eines elektrischen Audiosignals aus der Audioquelle. In einer geeigneten Ausgestaltung ist das Hörgerät ein Kopfhörer.

Vorzugsweise ist das Hörgerät ein binaurales Hörgerät, mit zwei Einzelgeräten, welche beim bestimmungsgemäßen Gebrauch vom Nutzer auf unterschiedlichen Seiten des Kopfes getragen werden, nämlich einmal im oder am linken Ohr und einmal im oder am rechten Ohr.

In einer bevorzugten Ausgestaltung identifiziert sich das Hörgerät als ein Gerät, welches sowohl ein Eingabeelement als auch ein Ausgabeelement aufweist. Daraus ergibt sich speziell beim Aufbau einer Bluetooth-Verbindung, dass sich das Hörgerät als Gerät der Klasse "Display Yes/No" identifiziert, wie weiter oben bereits erwähnt. Obwohl das Hörgerät keinen Bildschirm aufweist, gibt dieses dennoch die Eigenschaft "Display" an, da alternativ zu einem Bildschirm der Hörer als Ausgabeelement verwendet wird. Da mit dem Schalter auch eine einfache Eingabemöglichkeit vorhanden ist, wird diesbezüglich die Eigenschaft "Yes/No" angegeben, da der Schalter wenigstens eine Bestätigung ("Yes") ermöglicht und somit automatisch auch eine Ablehnung ("No"), z.B. durch Nichtbetätigung oder eine eigene Schalstellung hierfür.

Das Zusatzgerät ist bevorzugterweise ein mobiles Endgerät, insbesondere ein Smartphone, alternativ ein Notebook, Tablet, TV-Gerät oder dergleichen. In jedem Fall verfügt das Zusatzgerät sowohl über ein Ausgabeelement wie auch über ein Eingabeelement. Das Ausgabeelement ist hierbei ein Bildschirm des Zusatzgeräts und das Eingabeelement ist ein Schalter, z.B. ein Taster, oder ebenfalls der Bildschirm. In dem Verfahren identifiziert sich das Zusatzgerät insbesondere als ein Gerät der Klasse "Keyboard Display" oder zumindest "Display Yes/No" gemäß der genannten Bluetooth-Spezifikation.

Das Hörgerät weist zweckmäßigerweise ein Text-zu-Sprache-Modul auf, mit welchem das Hörgerät den Prüfcode zur Ausgabe über den Hörer in ein Audiosignal umwandelt. Somit wird beim Hörgerät der Prüfcode als Sprache ausgegeben und dem Nutzer sozusagen vorgelesen, sodass dieser den Prüfcode hören und verstehen kann und mit dem Prüfcode, welcher auf dem Bildschirm des Zusatzgeräts angezeigt wird, vergleichen kann.

Die Authentifizierung und somit auch der Aufbau der Kurzstreckenfunkverbindung werden zweckmäßigerweise abgebrochen, falls eine Ablehnung erkannt wird oder angenommen wird. Dies ist auf diverse Weisen möglich, nachfolgend werden vier geeignete Ausgestaltungen angegeben, welche grundsätzlich auch miteinander kombinierbar sind.

In einer ersten geeigneten Ausgestaltung wird die Authentifizierung abgebrochen, falls eine Ablehnung des Nutzers empfangen wird. Der Schalter des Hörgeräts ist als Zwei-Wege-Schalter ausgebildet, zur Eingabe einer Bestätigung einerseits und einer Ablehnung andererseits. Dadurch ist es dem Nutzer vorteilhaft ermöglicht, eine Ablehnung aktiv anzuzeigen. Die Ablehnung wird in diesem Fall daher auch als aktive Ablehnung bezeichnet.

In einer zweiten geeigneten Ausgestaltung wird die Authentifizierung abgebrochen, falls eine Ablehnung des Nutzers empfangen wird, wobei der Schalter des Hörgeräts derart ausgebildet ist, dass eine Bestätigung und eine Ablehnung durch unterschiedlich langes Betätigen des Schalters eingebbar sind. Auch in diesem Fall ist die Ablehnung eine aktive Ablehnung, da der Nutzer explizit eine entsprechende Eingabe vornehmen kann. Anstatt jedoch einen Zwei-Wege-Schalter oder generell einen Schalter mit mehreren Schaltstellung zu verwenden, ist nunmehr ein besonders einfacher Taster oder Knopf bereits ausreichend, da eine Bestätigung oder Ablehnung lediglich durch die Zeitspanne der Betätigung anzeigbar ist. Entsprechend ist der Schalter vorzugsweise ein Taster oder Knopf.

In einer dritten geeigneten Ausgestaltung wird die Authentifizierung automatisch abgebrochen, falls über einen vorbestimmten Zeitraum keine Bestätigung empfangen wird, d.h. keine Betätigung des Schalters. Die Ablehnung wird daher auch als passive Ablehnung bezeichnet, da im Gegensatz zur oben erwähnten aktiven Ablehnung nunmehr keine aktive Handlung des Nutzers gefordert wird. Der Zeitraum beträgt beispielsweise 1 s bis 1 min.

In einer vierte geeigneten Ausgestaltung wird die Authentifizierung abgebrochen, falls das Hörgerät vom Nutzer ausgeschaltet wird. Wie genau das Hörgerät ausschaltbar ist, ist dabei von untergeordneter Bedeutung, z.B. weist das Hörgerät hierzu einen Ein/Aus-Schalter auf. Das Ausschalten des Hörgeräts wird hierbei als Ablehnung interpretiert. Da eine explizite Handlung des Nutzers erforderlich ist, liegt in diesem Fall eine aktive Ablehnung vor.

Ein erfindungsgemäßes Hörgerät ist ausgebildet zur Durchführung eines Verfahrens wie vorstehend beschrieben. Vorzugsweise weist das Hörgerät hierzu eine Steuereinheit auf. In der Steuereinheit sind die vom Hörgerät durchgeführten Verfahrensschritte insbesondere programmtechnisch oder schaltungstechnisch realisiert oder eine Kombination hiervon. Beispielsweise ist die Steuereinheit hierfür als ein Mikroprozessor oder als ein ASIC ausgebildet oder als eine Kombination hiervon.

Nachfolgend werden Ausführungsbeispiele der Erfindung anhand einer Zeichnung näher erläutert. Darin zeigen jeweils schematisch:
- Fig. 1: ein Verfahren zum Aufbau einer Kurzstreckenfunkverbindung,
- Fig. 2: ein Hörgerät und ein Zusatzgerät.

Fig. 1 zeigt ein Ausführungsbeispiel für ein Verfahren zum Aufbau einer Kurzstreckenfunkverbindung 2, hier speziell einer Bluetooth-Verbindung, zwischen zwei Geräten 4, 6, nämlich einem Hörgerät 4 und einem Zusatzgerät 6. Die beiden Geräte 4, 6 weisen jeweils eine nicht explizit gezeigte Schnittstelle für die Kurzstreckenfunkverbindung 2 auf, z.B. eine Antenne, hier eine Bluetooth-Antenne. Der Aufbau der Kurzstreckenfunkverbindung 2 wird auch als Kopplung, Paarung oder "Pairing" bezeichnet. Die Kurzstreckenfunkverbindung 2 zeichnet sich vorliegend dadurch aus, dass diese eine beschränkte Reichweite von höchstens wenigen 10 m aufweist sowie eine Übertragungsfrequenz im Bereich weniger GHz.

Ausführungsbeispiele für die beiden Geräte 4, 6 sind in Fig. 2 gezeigt, welche auch die Kurzstreckenfunkverbindung 2 zeigt. Das Hörgerät 4 weist einen Schalter 8 als ein Eingabeelement 8 auf und einen Hörer 10 als ein Ausgabeelement 10. Das Zusatzgerät 6 weist ein Eingabeelement 12 und ein Ausgabeelement 14 auf. Beim Hörgerät 4 sind das Eingabeelement und das Ausgabeelement voneinander verschieden. Beim Zusatzgerät 6 fallen das Eingabeelement 12 und das Ausgabeelement 14 zu einem einzelnen Ein- Ausgabeelement zusammen, sind aber in einer nicht gezeigten Variante wie beim Hörgerät 4 separat ausgebildet.

Bei dem Verfahren wird eine gegenseitige Authentifizierung durchgeführt, d.h. die beiden Geräte 4, 6 authentifizieren sich einander, um zu überprüfen, dass die Kurzstreckenfunkverbindung 2 auch tatsächlich wie beabsichtigt zwischen dem Hörgerät 4 und dem Zusatzgerät 6 hergestellt wird und nicht fälschlicherweise zwischen einem der beiden Geräte 4, 6 und einem dritten, nicht gezeigten Gerät. Die gegenseitige Authentifizierung wird durchgeführt, indem ein jeweiliges Gerät 4, 6 eine Zeichenfolge Na, Nb generiert und an das andere Gerät 4, 6 übermittelt und indem anschließend auf beiden Geräten 4, 6 jeweils mithilfe beider Zeichenfolgen Na, Nb ein Prüfcode Va, Vb generiert wird und über das jeweilige Ausgabeelement 10, 14 an einen Nutzer ausgegeben wird. Diese beiden Zeichenfolgen Na, Nb werden auch als private Zeichenfolgen Na, Nb bezeichnet. Beim Hörgerät 4 wird der Prüfcode Va, Vb als Schallsignal ausgegeben, beim Zusatzgerät 6 wird der Prüfcode Va, Vb beispielsweise angezeigt oder auf andere Weise ausgegeben.

Die jeweilige Zeichenfolge Na, Nb wird vom jeweiligen Gerät 4, 6 selbstständig generiert und vorliegend zufallsgeneriert. Das Zusatzgerät 6 erzeugt in Fig. 1 die Zeichenfolge Na im Schritt S1, das Hörgerät 4 erzeugt die Zeichenfolge Nb in Fig. 1 im Schritt S2, welcher gleichzeitig oder zeitversetzt zum Schritt S1 erfolgt. Die jeweilige Zeichenfolge Na, Nb ist hier eine Einmalzeichenfolge, welche lediglich für einen einzelnen Versuch zum Aufbau einer Kurzstreckenfunkverbindung 2 verwendet wird. Bei einem erneuten Versuch wird eine neue Zeichenfolge Na, Nb generiert.

Die Übermittlung der beiden Zeichenfolgen folgt wie in Fig. 1 erkennbar ist einem Protokoll wie in Figur 2.3 im Abschnitt Vol. 3, Part H, 2.3 "Pairing Methods" der eingangs bereits genannten Bluetooth-Spezifikation 5.2 gezeigt. Der zeitliche Verlauf des Verfahrens ergibt sich beim Lesen der Fig. 1 von oben nach unten. Die beiden Zeichenfolgen Na, Nb werden übermittelt und zusätzlich stellt jedes der beiden Geräte 4, 6 einen öffentlichen Schlüssel PKa, PKb bereit und übermittelt diesen an das jeweils andere Gerät 4, 6, sodass jedes der beiden Geräte 4, 6 die beiden öffentlichen Schlüssel PKa, PKb sowie seine eigene, private Zeichenfolge Na, Nb kennt. Die Übermittlung der öffentlichen Schlüssel PKa, PKb ist in Fig. 1 nicht explizit gezeigt und kann grundsätzlich auch außerhalb des eigentlichen Verfahrens erfolgen.

Nachfolgend wird ohne Beschränkung der Allgemeinheit das Zusatzgerät 6 als Gerät A bezeichnet und das Hörgerät 4 als Gerät B und angenommen, dass das Gerät A das initialisierende Gerät ist und das Gerät B das nicht-initialisierende Gerät. Das Zusatzgerät 6 und die Verfahrensschritte im Zusammenhang damit sind in Fig. 1 links dargestellt, das Hörgerät 4 und die Verfahrensschritte im Zusammenhang damit dagegen rechts. Das Hörgerät 4 erzeugt im Schritt S3 mittels einer vorbestimmten Funktion F aus den beiden öffentlichen Schlüsseln PKa, PKb und seiner eigene Zeichenfolge Nb einen Bestätigungsschlüssel Cb, welcher im Schritt S4 an das Zusatzgerät 6 übermittelt wird, woraufhin dieses im Schritt S5 seine private Zeichenfolge Na an das Hörgerät 4 zurückübermittelt, sodass dieses nun im Besitz beider Zeichenfolgen Na, Nb ist. Daraufhin übersendet das Hörgerät 4 im Schritt S6 seine Zeichenfolge Nb an das Zusatzgerät 6, sodass nun auch das Zusatzgerät 6 im Besitz beider Zeichenfolgen Na, Nb ist. Das Zusatzgerät 6 errechnet nun im Schritt S7 auf die gleiche Weise wie das Hörgerät 4 einen Bestätigungsschlüssel Cb und überprüft, ob dieser mit dem Bestätigungsschlüssel Cb, welchen das Hörgerät 4 übermittelt hat, übereinstimmt. Dabei errechnet das Zusatzgerät 6 den Bestätigungsschlüssel Cb mit der gleichen Funktion F und auf Basis der beiden öffentlichen Schlüssel PKa, PKb sowie der Zeichenfolge Nb des Hörgeräts 4, die eigene Zeichenfolge Na des Zusatzgeräts 6 wird dabei aber nicht verwendet. Falls die beiden Bestätigungsschlüssel Cb übereinstimmen erzeugt das Zusatzgerät 6 im Schritt S8 aus den beiden Schlüsseln PKa, PKb und den beiden Zeichenfolgen Na, Nb einen Prüfcode Va und gibt diesen hier ebenfalls im Schritt S8 aus. In gleicher Weise erzeugt auch das Hörgerät 4 in einem Schritt S9 zeitversetzt oder gleichzeitig einen Prüfcode Vb und gibt diesen ebenfalls aus, hier auch im Schritt S9. Der jeweilige Prüfcode Va, Vb wird hier von beiden Geräten 4, 6 jeweils mittels einer Funktion G erzeugt. Der Prüfcode Va, Vb ist hier jeweils eine sechsstellige Ziffernfolge. Falls ein "man-in-the-middle"-Angriff erfolgt ist, unterscheiden sich die beiden Prüfcodes Va, Vb mit hoher Wahrscheinlichkeit.

Beide Geräte 4, 6 erwarten nun in einem jeweiligen Schritt S10, S11 eine Bestätigung des jeweiligen Prüfcodes Va, Vb durch einen Nutzer. Der Nutzer kann nun die beiden Prüfcodes Va, Vb vergleichen und bei einer Übereinstimmung auf beiden Geräten 4, 6 jeweils eine Bestätigung eingeben. Die Überprüfung der Prüfcodes Va, Vb durch den Nutzer ist an sich kein Bestandteil des Verfahrens, das Verfahren selbst umfasst hier lediglich das Warten auf eine Bestätigung und deren Entgegennahme, sofern eine Bestätigung erfolgt. Die Authentifizierung wird dann erfolgreich abgeschlossen und daraufhin die Kurzstreckenfunkverbindung 2 aufgebaut, falls über das jeweilige Eingabeelement 8, 12 eine Bestätigung des Nutzers empfangen wird, dass die Prüfcodes Va, Vb, welche ausgegeben worden sind, übereinstimmen. Im Falle der hier gezeigten Bluetooth-Verbindung ist somit das "Numeric Comparison"-Verfahren gemäß der genannten Bluetooth-Spezifikation realisiert. Die Bestätigung ist eine einfache Eingabe, welche lediglich zur Bestätigung dient, nicht aber eine Eingabe eines Schlüssels oder eines Prüfcodes Va, Vb umfasst.

Das Eingabeelement 8 des Hörgeräts 4 ermöglicht im gezeigten Ausführungsbeispiel eine "ja/nein"-Eingabe, d.h. eine Auswahl einer von zwei Antworten. Ebenfalls geeignet ist auch ein nicht gezeigtes Eingabeelement 8, welches lediglich eine einzelne Antwort ermöglicht, welche dann als "ja" gewertet wird, d.h. als Bestätigung. Ein Ausbleiben einer Antwort wird dann insbesondere als "nein" gewertet, d.h. als Ablehnung.

Das gezeigte Hörgerät 4 ist ausgebildet zur Durchführung des Verfahrens wie vorstehend beschrieben. Das Hörgerät 4 wiest hierzu eine Steuereinheit 16 auf, in welcher die vom Hörgerät 4 durchgeführten Verfahrensschritte, hier die Schritte S1, S5, S7, S8, S10 programmtechnisch oder schaltungstechnisch realisiert sind oder eine Kombination hiervon.

Das hier gezeigte Hörgerät 4 dient zur Versorgung eines hörgeschädigten Nutzers. Hierzu weist das Hörgerät 4 ein nicht explizit bezeichnetes Mikrofon auf, welches Schall aus der Umgebung aufnimmt und ein elektrisches Eingangssignal erzeugt. Dieses wird zur Modifikation einer nicht dargestellten Signalverarbeitung des Hörgeräts 4 zugeführt. Die Signalverarbeitung ist hier ein Teil der Steuereinheit 16 des Hörgeräts 4. Die Modifikation erfolgt anhand eines individuellen Audiogramms des Nutzers, welcher dem Hörgerät 4 zugeordnet ist, sodass ein individuelles Hördefizit des Nutzers ausgeglichen wird. Die Signalverarbeitung gibt als Ergebnis ein elektrisches Ausgangssignal aus, welches dann über den Hörer 10 des Hörgeräts 4 wieder in Schall umgewandelt wird und an den Nutzer ausgegeben wird. In einer nicht gezeigten Alternative ist das Hörgerät 4 lediglich zur Ausgabe von Schall aus einer Audioquelle ausgebildet und weist entsprechend einen Hörer 10 auf, zur Schallausgabe, und einen Eingang, zum Empfang eines elektrischen Audiosignals aus der Audioquelle. Beispielsweise ist das Hörgerät 4 ein Kopfhörer. Im hier gezeigten Ausführungsbeispiel ist das Hörgerät 4 zudem ein binaurales Hörgerät 4, mit zwei Einzelgeräten, welche beim bestimmungsgemäßen Gebrauch vom Nutzer auf unterschiedlichen Seiten des Kopfes getragen werden, nämlich einmal im oder am linken Ohr und einmal im oder am rechten Ohr.

In der gezeigten Ausgestaltung identifiziert sich das Hörgerät 4 als ein Gerät, welches sowohl ein Eingabeelement 8 als auch ein Ausgabeelement 10 aufweist. Daraus ergibt sich speziell beim Aufbau einer Bluetooth-Verbindung, dass sich das Hörgerät 4 als Gerät der Klasse "Display Yes/No" identifiziert. Obwohl das Hörgerät 4 keinen Bildschirm aufweist, gibt dieses dennoch die Eigenschaft "Display" an, da alternativ zu einem Bildschirm der Hörer 10 als Ausgabeelement verwendet wird. Da mit dem Schalter 8 auch eine einfache Eingabemöglichkeit vorhanden ist, wird diesbezüglich die Eigenschaft "Yes/No" angegeben.

Das Zusatzgerät 6 ist im gezeigten Ausführungsbeispiel ein mobiles Endgerät und speziell ein Smartphone, alternativ ein Notebook, Tablet, TV-Gerät oder dergleichen. In jedem Fall verfügt das Zusatzgerät 6 sowohl über ein Ausgabeelement 14 wie auch über ein Eingabeelement 12. Das Eingabeelement 12 und das Ausgabeelement 14 sind hier gemeinsam ein Bildschirm des Zusatzgeräts 6. In dem Verfahren identifiziert sich das Zusatzgerät 6 vorliegend als ein Gerät der Klasse "Keyboard Display" oder zumindest "Display Yes/No" gemäß der genannten Bluetooth-Spezifikation.

Das Hörgerät 4 weist vorliegend ein Text-zu-Sprache-Modul 18 auf, mit welchem das Hörgerät 4 den Prüfcode Vb zur Ausgabe über den Hörer 10 in ein Audiosignal umwandelt. Somit wird beim Hörgerät 4 der Prüfcode Vb als Sprache ausgegeben und dem Nutzer sozusagen vorgelesen, sodass dieser den Prüfcode Vb hören und verstehen kann und mit dem Prüfcode Va, welcher auf dem Bildschirm des Zusatzgeräts 6 angezeigt wird, vergleichen kann. Das Text-zu-Sprache-Modul 18 ist hier ein Teil der Steuereinheit 16.

Die Authentifizierung und somit auch der Aufbau der Kurzstreckenfunkverbindung 2 werden vorliegend abgebrochen, falls eine Ablehnung erkannt wird oder angenommen wird. Dies ist auf diverse Weisen möglich, nachfolgend werden vier mögliche Ausgestaltungen angegeben, welche grundsätzlich auch miteinander kombinierbar sind.

In einer ersten Ausgestaltung wird die Authentifizierung abgebrochen, falls eine Ablehnung des Nutzers empfangen wird. Der Schalter 8 des Hörgeräts 4 ist als Zwei-Wege-Schalter ausgebildet, zur Eingabe einer Bestätigung einerseits und einer Ablehnung andererseits. Dadurch ist es dem Nutzer vorteilhaft ermöglicht, eine Ablehnung aktiv anzuzeigen. Die Ablehnung wird in diesem Fall daher auch als aktive Ablehnung bezeichnet.

In einer zweiten Ausgestaltung wird die Authentifizierung abgebrochen, falls eine Ablehnung des Nutzers empfangen wird, wobei der Schalter 8 des Hörgeräts 4 derart ausgebildet ist, dass eine Bestätigung und eine Ablehnung durch unterschiedlich langes Betätigen des Schalters 8 eingebbar sind. Auch in diesem Fall ist die Ablehnung eine aktive Ablehnung, da der Nutzer explizit eine entsprechende Eingabe vornehmen kann. Anstatt jedoch einen Zwei-Wege-Schalter oder generell einen Schalter 8 mit mehreren Schaltstellung zu verwenden, ist nunmehr ein einfacher Taster oder Knopf bereits ausreichend, da eine Bestätigung oder Ablehnung lediglich durch die Zeitspanne der Betätigung anzeigbar ist. Entsprechend ist der Schalter 8 beispielsweise ein Taster oder Knopf.

In einer dritten Ausgestaltung wird die Authentifizierung automatisch abgebrochen, falls über einen vorbestimmten Zeitraum keine Bestätigung empfangen wird, d.h. keine Betätigung des Schalters 8. Die Ablehnung wird daher auch als passive Ablehnung bezeichnet, da im Gegensatz zur oben erwähnten aktiven Ablehnung nunmehr keine aktive Handlung des Nutzers gefordert wird. Der Zeitraum beträgt beispielsweise 1 s bis 1 min.

In einer vierte Ausgestaltung wird die Authentifizierung abgebrochen, falls das Hörgerät 4 vom Nutzer ausgeschaltet wird. Wie genau das Hörgerät 4 ausschaltbar ist, ist dabei von untergeordneter Bedeutung, z.B. weist das Hörgerät 4 hierzu einen Ein/Aus-Schalter auf. Das Ausschalten des Hörgeräts 4 wird hierbei als Ablehnung interpretiert. Da eine explizite Handlung des Nutzers erforderlich ist, liegt in diesem Fall eine aktive Ablehnung vor.

### Bezugszeichenliste

- 2: Kurzstreckenfunkverbindung
- 4: Hörgerät
- 6: Zusatzgerät
- 8: Schalter, Eingabeelement
- 10: Hörer, Ausgabeelement
- 12: Eingabeelement
- 14: Ausgabeelement
- 16: Steuereinheit
- 18: Text-zu-Sprache-Modul
- Cb: Bestätigungsschlüssel
- F: Funktion
- G: Funktion
- Na: Zeichenfolge
- Nb: Zeichenfolge
- Va: Prüfcode
- Vb: Prüfcode

## Patentansprüche

1. Verfahren zum Aufbau einer Kurzstreckenfunkverbindung (2), insbesondere einer Bluetooth-Verbindung, zwischen zwei Geräten (4, 6), nämlich einem Hörgerät (4) und einem Zusatzgerät (6),
- wobei das Hörgerät (4) einen Schalter (8) als ein Eingabeelement aufweist und einen Hörer (10) als ein Ausgabeelement,
- wobei das Zusatzgerät (6) ein Eingabeelement (12) und ein Ausgabeelement (14) aufweist,
- wobei eine gegenseitige Authentifizierung durchgeführt wird, indem ein jeweiliges Gerät (4, 6) eine Zeichenfolge (Na, Nb) generiert und an das andere Gerät (4, 6) übermittelt und indem anschließend auf beiden Geräten (4, 6) jeweils mithilfe beider Zeichenfolgen (Na, Nb) ein Prüfcode (Va, Vb) generiert wird und über das jeweilige Ausgabeelement (10, 14) an einen Nutzer ausgegeben wird,
- wobei die Authentifizierung erfolgreich abgeschlossen wird und daraufhin eine Kurzstreckenfunkverbindung 2 aufgebaut wird, falls über das jeweilige Eingabeelement (8, 12) eine Bestätigung des Nutzers empfangen wird, dass die Prüfcodes (Va, Vb), welche ausgegeben worden sind, übereinstimmen.

2. Verfahren nach Anspruch 1,
wobei sich das Hörgerät (4) als ein Gerät identifiziert, welches sowohl ein Eingabeelement (8) als auch ein Ausgabeelement (10) aufweist.

3. Verfahren nach Anspruch 1 oder 2,
wobei das Zusatzgerät (6) ein mobiles Endgerät ist, insbesondere ein Smartphone,
wobei das Ausgabeelement (14) ein Bildschirm des Zusatzgeräts (6) ist und das Eingabeelement (12) ein Schalter, ein Taster oder ebenfalls der Bildschirm.

4. Verfahren nach einem der Ansprüche 1 bis 3,
wobei das Hörgerät (4) ein Text-zu-Sprache-Modul (18) aufweist, mit welchem das Hörgerät (4) den Prüfcode (Vb) zur Ausgabe über den Hörer (10) in ein Audiosignal umwandelt.

5. Verfahren nach einem der Ansprüche 1 bis 4,
wobei die Authentifizierung abgebrochen wird, falls eine Ablehnung des Nutzers empfangen wird,
wobei der Schalter (8) des Hörgeräts (4) als Zwei-Wege-Schalter ausgebildet ist, zur Eingabe einer Bestätigung einerseits und einer Ablehnung andererseits.

6. Verfahren nach einem der Ansprüche 1 bis 5,
wobei die Authentifizierung abgebrochen wird, falls eine Ablehnung des Nutzers empfangen wird,
wobei der Schalter (8) des Hörgeräts (4) derart ausgebildet ist, dass eine Bestätigung und eine Ablehnung durch unterschiedlich langes Betätigen des Schalters (8) eingebbar sind.

7. Verfahren nach einem der Ansprüche 1 bis 6,
wobei die Authentifizierung automatisch abgebrochen wird, falls über einen vorbestimmten Zeitraum keine Bestätigung empfangen wird.

8. Verfahren nach einem der Ansprüche 1 bis 7,
wobei die Authentifizierung abgebrochen wird, falls das Hörgerät (4) vom Nutzer ausgeschaltet wird.

9. Hörgerät (4), welches ausgebildet ist zur Durchführung eines Verfahrens nach einem der Ansprüche 1 bis 8.
